# EUROPÄISCHE PATENTSCHRIFT

(11) **EP 2 354 305 B1**
(45) Veröffentlichungstag und Bekanntmachung des Hinweises auf die Patenterteilung: **02.09.2015**
(21) Anmeldenummer: 11000554.3
(22) Anmeldetag: 25.01.2011
(51) Int. Cl.: E01C 1/00, E01C 7/08, E01C 7/18, C04B 14/30, C04B 18/02, C04B 20/10, C04B 111/00, C04B 111/20

(54) **Gesteinskörnung zur Herstellung eines Verkehrswegs und Verfahren zur Herstellung eines Verkehrswegs mit einer photokatalytisch aktiven Schicht**
Mineral aggregate for road and method for producing a road with a photocatalytic activ coating
Granulat mineral pour la fabrication d'un revêtement routier et procédé de fabrication d'un revêtement routier avec une couche active photocatalytique

(30) Priorität: 08.02.2010 DE 102010007316; 20.04.2010 DE 102010015786
(43) Veröffentlichungstag der Anmeldung: 10.08.2011
(73) Patentinhaber: Franz Carl Nüdling Basaltwerke GmbH + Co. KG, 36037 Fulda (DE)
(72) Erfinder: Nüdling, Peter, 36100 Petersberg (DE); Klöppner, Bernhard, 36124 Eichenzell (DE); Tischer, Werner, Dr., 98634 Unterwald (DE)
(74) Vertreter: Ellberg, Nils

(56) Entgegenhaltungen:
- EP-A1- 1 405 835
- EP-A1- 1 752 429
- WO-A1-2006/000565
- JP-A- 2001 170 498
- JP-A- 2005 180 136
- US-A1- 2003 129 412

## Beschreibung

Die Erfindung betrifft eine Gesteinskörnung zur Herstellung eines Verkehrswegs, insbesondere einer Asphalt- oder Betonstraße, mit einer photokatalytisch aktiven Oberflächenschicht zur Reduktion von Stickoxiden, gemäß dem Oberbegriff des Anspruchs 1. Weiterhin betrifft die Erfindung ein Verfahren zur Herstellung eines Verkehrswegs mit einer solchen Gesteinskömung gemäß dem Oberbegriff des Anspruchs 7, siehe z.B. das Dokument JP 2001170498 A.

Photokatalytisch aktive Stoffe zur Schadstoffreduzierung sind bereits wissenschaftlich vielfältig untersucht und bereits in einigen Ländern in verschiedensten Bereichen Stand der Technik. Insbesondere lassen sich Stickoxide (NOx), welche beispielsweise von Automobilen abgegeben werden, mit Hilfe solcher Stoffe reduzieren. Diesbezüglich besteht im Bereich von Fernstraßen sowie innerörtlichen Hauptverkehrsstraßen durch eine hohe Schadstoffbelastung ein entsprechend großer Bedarf für eine Reduzierung der in der Luft enthaltenen Schadstoffe. Der Einsatz solcher Stoffe in Verkehrsflächen bietet sich zudem an, da die Fahrbahnoberfläche durch die Nähe zur Emissionsquelle sowie die Turbulenzen aus den Fahrzeugbewegungen ideale Voraussetzungen für eine extrem hohe Schadstoffreduzierung bietet.

Bei Straßen in Pflasterbauweise ist der Einsatz von photokatalytisch aktiven Stoffen bereits bekannt. Es ist jedoch aufgrund der technischen Regelwerke nicht machbar, bei Verkehrsflächen mit hoher Belastung wie bei Fernstraßen oder Hauptverkehrsstraßen auf derartige Pflasterbauweisen zurückzugreifen.

Alle Versuche, photokatalytisch aktive Stoffe in Verbindung mit Verkehrswegen in Asphaltbauweise einzusetzen, sind bisher nicht erfolgreich gewesen. Dies liegt vor allem an der Unverträglichkeit des organischen Bindemittels Bitumen mit dem Photokatalysator, z.B. Titandioxid (Ti02). Der Photokatalysator bewirkt unter Beteiligung von Sonnenlicht, dass sowohl Luftschadstoffe zerstört werden, aber auch dass Bitumen unter diesen Voraussetzungen angegriffen wird. Bei der Einmischung von Ti02 in den Asphalt wird aber im Regelfall überhaupt keine Reduzierung der Luftschadstoffe eintreten, da dann das Ti02 komplett vom Bitumen ummantelt wird und keinerlei Reaktion zwischen Ti02 und dem Sonnenlicht stattfindet.

Ein Einsatz im Betonstraßenbau in der Weise, dass der komplette Betonquerschnitt mit z.B. Ti02 versetzt wird, ist wirtschaftlich nicht umsetzbar und letztendlich ökologisch auch zweifelhaft.

Hiervon ausgehend liegt der Erfindung die Aufgabe zu Grunde, die vorstehend geschilderten Konflikte zu lösen und es möglich machen, mit den heute üblichen und angewendeten Bauverfahren sowohl für Asphaltstraßen als auch für Betonstraßen photokatalytisch hochaktive Straßenoberflächen zu bauen.

Zur Lösung dieser Aufgabe ist eine spezielle Gesteinskörnung vorgesehen, die bei der Herstellung eines Verkehrswegs in Asphalt- oder Betonbauweise eingesetzt werden kann.

Die Besonderheit der Gesteinskörnung besteht darin, dass diese eine photokatalytisch aktive Substanz, insbesondere Titandioxid, aufweist. Durch Einbau der Gesteinskörnung im Bereich einer Oberflächenschicht des Verkehrswegs lässt sich die gewünschte Wirkung erzielen. Vorzugsweise erfolgt der Einbau durch Einarbeiten der Gesteinskörnung auf die Oberflächenschicht des Verkehrswegs, beispielsweise durch Aufstreuen und Einwalzen.

Bei der Gesteinskörnung handelt es sich vorzugsweise um einen körnigen bis pulverförmigen, leicht schüttbaren Feststoff, der aus einem natürlichen oder künstlichen Gestein gebildet ist. Als natürliche Gesteine kommen zum Beispiel solche in Frage, die ohnehin im Straßenbau in Asphalt- oder Betonbauweise zum Einsatz kommen. Künstliche Gesteine können aus Zement oder mit einem hydraulischen Bindemittel wie Zement hergestellt sein. Denkbar ist es beispielsweise, entsprechende Baustoffe zu brechen und/oder zu mahlen, um eine entsprechende Gesteinskörnung zu erhalten.

Erfindungsgemäß weist das Material der Gesteinskörnung selbst eine photokatalytisch aktive Substanz auf, beispielsweise mit Titandioxid dotiert sein. Weiterhin ist es denkbar, die Gesteinskörnung mit einer Beschichtung auszustatten, die dann die photokatalytisch aktive Substanz aufweist oder aus dieser besteht, wohingegen der von der Beschichtung oder Umhüllung umgebene Kern frei von der Substanz ist. Alternativ ist es auch möglich, dass die Beschichtung bzw. Umhüllung frei von photokatalytisch aktiven Substanzen ist, jedoch der Kern diese Substanzen enthält. In diesem Fall werden die photokatalytisch aktiven Substanzen erst mit der Zeit freigelegt, nämlich durch den Verkehr.

Bei der Verwendung von künstlichen Gesteinen ist es auch denkbar, die Substanz bei der Herstellung des Gesteins dem hydraulischen Bindemittel hinzuzufügen.

Das Auf- bzw. Einbringen der erfindungsgemäßen Gesteinskörnung erfolgt im Bereich der Oberflächenschicht des Verkehrswegs. Bei einem mehrschichtigen Aufbau des Verkehrswegs handelt es sich dabei in der Regel um die Deckschicht. Andernfalls ist die Oberflächenschicht die einzige Schicht des Verkehrswegs.

Die Gesteinskörnung muss so eingebaut werden, dass es in Kontakt mit der Luft kommt. Denkbar ist zum einen ein Aufstreuen und/oder Einbetten nur im Bereich der Oberseite der Oberflächenschicht. Die Oberflächenschicht kann aber auch komplett mit der Gesteinskörnung versetzt sein.

Für den Fall, dass die photokatalytisch aktive Substanz durch eine Beschichtung oder Ummantelung der Gesteinskörnung verdeckt wird, muss diese erst durch den rollenden Verkehr freigelegt werden. Alternativ kommt eine entsprechende Behandlung nach Einbau der Gesteinskörnung in Frage.

Dadurch dass sich zumindest Teile der Gesteinskörnung unmittelbar an der Oberfläche des Straßenbelags befinden, sind optimale Voraussetzungen für eine hohe Reduzierung der Schadstoffe gegeben. Zudem ist es nach dem hier geschilderten Verfahren möglich photokatalytisch aktive Substanzen im Zusammenhang mit Asphaltstraßen wirksam einzusetzen.

Vorzugsweise wird die Gesteinskörnung auf eine Oberflächenschicht des Verkehrswegs aufgebracht und in diese eingewalzt. Alternativ oder zusätzlich kann auch ein Bindemittel, wie beispielsweise eine bituminöse Schicht, vorzugsweise eine Bitumenschicht, auf einen bereits vorhandenen Verkehrsweg aufgebracht werden bzw. bei der Herstellung des Verkehrswegs vorgesehen werden. Auf dieses Bindemittel bzw. auf diese Schicht wird dann die Gesteinskörnung aufgebracht und in dieses bzw. diese eingewalzt.

Ebenfalls ist es möglich die Gesteinskörnung in bereits vorhandenen Asphaltflächen einzubauen, indem die Asphaltoberfläche angewärmt wird, sodass dann ein Aufstreuen und Einwalzen der Gesteinskörnung möglich ist.

Der vorstehend beschriebene Einbau ist auch bei Verkehrswegen in Betonbauweise denkbar. Alternativ kann die Gesteinskörnung aber auch als Zuschlagstoff beigegeben werden. Eine weitere Möglichkeit kann darin bestehen, dass die Gesteinskörnung nur im Bereich einer (dünnen) Deckschicht als Zuschlagstoff untergemischt ist.

Weiterhin wird Schutz für ein Herstellungsverfahren beansprucht, bei dem ein Verkehrsweg in gebundener Bauweise, beispielsweise ein Verkehrsweg in Asphalt- oder Betonbauweise, im Bereich einer Oberflächenschicht mit einer Gesteinskörnung versehen wird, die eine photokatalytisch aktive Substanz enthält.

In einem Verfahren zur Herstellung eines Verkehrsweges mit einer photokatalytisch aktiven Oberflächenschicht zur Reduktion von Stickoxiden wird insbesondere eine zusätzliche Vorsatz- und/oder Deckschicht vorgesehen. Diese Vorsatz- und/oder Deckschicht wird dabei bevorzugt auf die Oberflächenschicht des Verkehrswegs aufgebracht. Weiter besteht die Schicht vorzugsweise aus einer Gesteinskörnung, wie sie oben beschrieben ist. Eine solche zusätzliche Schicht kann sowohl bei der Neuherstellung eines Verkehrswegs wie auch bei bereits bestehenden Verkehrswegen aufgebracht werden.

Außerdem wird noch ein Verfahren zur Herstellung einer photokatalytisch aktiven Schicht zur Reduktion von Stickoxiden bereitgestellt, wobei die Schicht insbesondere als zusätzliche Vorsatz- und/oder Deckschicht eines Verkehrswegs vorgesehen wird. Die Schicht wird zumindest teilweise eine Gesteinskörnung enthaltend ausgebildet, insbesondere aus einer solchen hergestellt. Zur Herstellung der Schicht wird ein Material bereitgestellt, dass zumindest teilweise aus einer Gesteinskörnung nach den oben beschriebenen Ausbildungen besteht. Es kann jedoch auch vollständig aus der Gesteinskörnung bestehen.

Weiter bevorzugt wird das Material schichtförmig, insbesondere auf die Oberflächenschicht des Verkehrswegs aufgebracht und/oder in diese eingearbeitet, vorzugsweise eingewalzt.

## Patentansprüche

1. Gesteinskömung zur Herstellung eines Verkehrswegs, insbesondere einer Asphalt- oder Betonstraße, mit einer photokatalytisch aktiven Oberflächenschicht zur Reduktion von Stickoxiden wobei die Gesteinskörnung aus einem Künstlichen Gestein gebildet ist, **dadurch gekennzeichnet, dass** die Gesteinskömung selbst eine photokatalytisch aktive Substanz, insbesondere Titandioxid, aufweist.

2. Gesteinskömung nach Anspruch 1, **dadurch gekennzeichnet, dass** die Gesteinskömung mit Zement oder mit einem zementösen Bindemittel hergestellt ist.

3. Gesteinskörnung nach Anspruch 1 oder 2, **dadurch gekennzeichnet, dass** die Gesteinskömung einen Kern und wenigstens eine äußere Ummantelung des Kerns aufweist, wobei der Kern die photokatalytisch aktive Substanz aufweist und wobei die Ummantelung keine photokatalytisch aktive Substanz aufweist, und wobei die Ummantelung vorzugsweise durch eine mineralische Schutzschicht um den Kern gebildet ist.

4. Gesteinskörnung nach einem der vorhergehenden Ansprüche, **dadurch gekennzeichnet, dass** die photokatalytisch aktive Substanz Titandioxid ist.

5. Verkehrsweg in Asphalt- oder Betonbauweise mit einer photokatalytisch aktiven Oberflächenschicht zur Reduktion von Stickoxiden, **gekennzeichnet durch** eine Gesteinskörnung nach einem der vorhergehenden Ansprüche im Bereich der Oberflächenschicht ,wobei die Gesteinskörnung auf die Oberflächenschicht oberseitig aufgebracht und eingearbeitet ist, insbesondere **durch** Aufstreuen und Walzen.

6. Verkehrsweg nach Anspruch 5, **dadurch gekennzeichnet, dass** die Gesteinskörnung und/oder eine Schutzschicht desselben durch den Verkehr freigelegt ist.

7. Verfahren zur Herstellung eines Verkehrswegs mit einer photokatalytisch aktiven Oberflächenschicht zur Reduktion von Stickoxiden, **dadurch gekennzeichnet, dass** eine Gesteinskörnung nach einem der Ansprüche 1 bis 4 im Bereich der Oberflächenschicht aufgebracht und eingearbeitet wird.

8. Verfahren nach Anspruch 7, **dadurch gekennzeichnet, dass** die Gesteinskömung auf bzw. in eine Oberflächenschicht des Verkehrswegs und/oder eine als Bindemittel auf den Verkehrsweg aufgebrachte, vorzugsweise bituminöse Schicht, insbesondere Bitumenschicht, aufgebracht und/oder eingewalzt wird.

9. Verfahren nach Anspruch 7 oder 8, **dadurch gekennzeichnet, dass** eine vorhandene, insbesondere bituminöse Oberflächenschicht zunächst erwärmt wird und dann die Gesteinskömung aufgebracht und eingearbeitet wird.

## Claims

1. Mineral aggregate for producing a road, in particular an asphalt or concrete road, with a photocatalytically active surface layer for reducing nitrogen oxides, the mineral aggregate being formed from a synthetic mineral, **characterized in that** the mineral aggregate itself comprises a photocatalytically active substance, in particular titanium dioxide.

2. Mineral aggregate according to Claim 1, **characterized in that** the mineral aggregate is produced with cement or with a cementitious binder.

3. Mineral aggregate according to Claim 1 or 2, **characterized in that** the mineral aggregate has a core and at least one outer encasing of the core, the core having the photocatalytically active substance and the casing having no photocatalytically active substance, and the casing preferably being formed by a mineral protective layer around the core.

4. Mineral aggregate according to one of the preceding claims, **characterized in that** the photocatalytically active substance is titanium dioxide.

5. Road of an asphalt or concrete type of construction, with a photocatalytically active surface layer for reducing nitrogen oxides, **characterized by** a mineral aggregate according to one of the preceding claims in the region of the surface layer, the mineral aggregate being applied to the upper side of the surface layer and worked in, in particular by being scattered on and rolled.

6. Road according to Claim 5, **characterized in that** the mineral aggregate and/or the protective layer of the same is/are exposed by traffic.

7. Method for producing a road with a photocatalytically active surface layer for reducing nitrogen oxides, **characterized in that** a mineral aggregate according to one of Claims 1 to 4 is applied and worked in in the region of the surface layer.

8. Method according to Claim 7, **characterized in that** the mineral aggregate is applied to and/or rolled into a surface layer of the road and/or a layer, preferably bituminous, applied as a binder to the road, in particular a layer of bitumen.

9. Method according to Claim 7 or 8, **characterised in that** an existing surface layer, in particular bituminous, is first heated up and then the mineral aggregate is applied and worked in.

## Revendications

1. Granulat minéral pour la fabrication d'un revêtement routier, notamment d'une route en asphalte ou en béton, comprenant une couche de surface photocatalytiquement active pour la réduction des oxydes d'azote, le granulat minéral étant constitué par un minéral artificiel, **caractérisé en ce que** le granulat minéral lui-même comprend une substance photocatalytiquement active, notamment le dioxyde de titane.

2. Granulat minéral selon la revendication 1, **caractérisé en ce que** le granulat minéral est fabriqué avec du ciment ou avec un liant cimentaire.

3. Granulat minéral selon la revendication 1 ou 2, **caractérisé en ce que** le granulat minéral comprend un noyau et au moins un enrobage extérieur du noyau, le noyau comprenant la substance photocatalytiquement active et l'enrobage ne comprenant pas de substance photocatalytiquement active, et l'enrobage étant de préférence formé par une couche de protection minérale autour du noyau.

4. Granulat minéral selon l'une quelconque des revendications précédentes, **caractérisé en ce que** la substance photocatalytiquement active est le dioxyde de titane.

5. Revêtement routier dans une infrastructure en asphalte ou en béton, comprenant une couche de surface photocatalytiquement active pour la réduction des oxydes d'azote, **caractérisé par** un granulat minéral selon l'une quelconque des revendications précédentes dans la zone de la couche de surface, le granulat minéral étant appliqué sur le côté supérieur de la couche de surface et incorporé, notamment par épandage et cylindrage.

6. Revêtement routier selon la revendication 5, **caractérisé en ce que** le granulat minéral et/ou une couche de protection de celui-ci sont exposés par la circulation.

7. Procédé de fabrication d'un revêtement routier comprenant une couche de surface photocatalytiquement active pour la réduction des oxydes d'azote, **caractérisé en ce qu'**un granulat minéral selon l'une quelconque des revendications 1 à 4 est appliqué et incorporé dans la zone de la couche de surface.

8. Procédé selon la revendication 7, **caractérisé en ce que** le granulat minéral est appliqué sur et/ou cylindré dans une couche de surface du revêtement routier et/ou une couche, de préférence bitumineuse, appliquée en tant que liant sur le revêtement routier, notamment une couche de bitume.

9. Procédé selon la revendication 7 ou 8, **caractérisé en ce qu'**une couche de surface présente, notamment bitumineuse, est tout d'abord chauffée, puis le granulat minéral est appliqué et incorporé.
